# EUROPEAN PATENT SPECIFICATION

(11) **EP 1 327 979 B1**
(45) Date of publication and mention of the grant of the patent: **29.03.2006**
(21) Application number: 03000333.9
(22) Date of filing: 09.01.2003
(51) Int. Cl.: G11B 7/24

(54) **Optical information recording medium**
Optisches Informationsaufzeichnungsmedium
Support d'enregistrement optique d'informations

(30) Priority: 11.01.2002 JP 2002004529; 11.01.2002 JP 2002004530
(43) Date of publication of application: 16.07.2003
(73) Proprietor: FUJI PHOTO FILM CO., LTD., Minami-Ashigara-shi, Kanagawa-ken 250-0123 (JP)
(72) Inventor: Usami, Yoshihisa, Minami-Ashigara-shi, Kanagawa 250-0123 (JP); Kawai, Hiroshi, Minami-Ashigara-shi, Kanagawa 250-0123 (JP)
(74) Representative: Klunker . Schmitt-Nilson . Hirsch

(56) References cited:
- EP-A- 0 994 466
- FR-A- 2 720 183
- US-A- 5 353 277
- US-A- 5 904 969
- US-B1- 6 510 126
- PATENT ABSTRACTS OF JAPAN vol. 2000, no. 07, 29 September 2000 (2000-09-29) & JP 2000 123409 A (SAMSUNG ELECTRONICS CO LTD), 28 April 2000 (2000-04-28)
- JPN. J. OF APPL. PHYS., vol. 38, 10 October 1999 (1999-10-10), pages 6114-6117,

## Description

### BACKGROUND OF THE INVENTION

The present invention relates to an optical information recording medium of a recordable type on which information can be recorded and reproduced by means of a laser beam and, more particularly, to an optical information recording medium on which information can be securely recorded without error and which allows the information to be securely read by a commercially available compact disc player.

The present invention also relates to an optical information recording medium of a hybrid type including a read-only area where information is previously stored and a recordable area where information can be recorded and reproduced by means of a laser beam and, more particularly, to an optical information recording medium on which information can be recorded without error and which allows the information to be securely read by a commercially available compact disc player.

In recent years, image recording media using a beam of high energy density such as a laser beam have been developed and are now in practical use. The information recording media are generally called optical discs and can be used as a video disc and an audio disc as well as a large-capacity static image file and a large-capacity disc memory for a computer.

Among these information recording media, a compact disc (CD) is now widely used as an audio disc for reproducing music or the like. The compact disc is used only for reproducing information composed of a sequence of pits which have been formed on a substrate during the manufacturing of the disc. That is, the compact disc is prepared by molding a flexible plastic material to form pits in the spiral shape and then forming a metal layer as a reflective layer on the surface thereof. As apparent from the above, the compact disc is a recording medium for only reproducing information.

Information on the compact disc can be read by irradiating the compact disc with the laser beam while rotating the disc. The information is reproduced by detecting variation in the amount of a reflected light. The variation is caused by presence or absence of pits on the disc. The compact disc used only for reproducing information is prepared such that the information thereon is read (reproduced) under rotation of the CD at a constant linear velocity of 1.2 to 1.4 m/sec according to the standard of CDs and the CD is required to have a signal recording area of which inner diameter is 46 mm and outer diameter is 117 mm to provide a recording time of up to 74 minutes at a track pitch of 1.6 µm.

As mentioned above, the audio CD is now widely used. Accordingly, commercially available CD players for reproducing information on audio CDs are also widely generally used. In virtue of mass production of audio CDs, the improvement in quality and the reduction in cost have been achieved.

On the other hand, information recording media of a DRAW-type (Direct-read-after-write) (hereinafter, sometimes referred to as a DRAW-type optical information recording medium) capable of writing (recording) information have been developed and are now in practical use. The DRAW-type information recording medium (optical disc) basically comprises a disc-shaped substrate, made of plastic or glass, and a recording layer made of a metal such as Bi, Sn, In, Te, or a semi-metal or a recording layer made of a dye which is formed on the substrate. Recording of information on the optical disc may be carried out by irradiating the optical disc with a laser beam under rotation of the disc. The irradiated area of the recording layer of the optical disc absorbs optical energy of the laser beam so as to locally rise the temperature. As a result of this, a physical change such as pit formation or a chemical change such as phase change is caused to alter the optical characteristics, thereby recording information on the optical disc. Reading (reproduction) of information on the optical disc is also carried out by irradiating the optical disc with a laser beam, that is, the information is reproduced by detecting a reflected light or a transmitted light corresponding to the alteration in optical characteristics of the recording layer.

Irradiation of the optical disc with the laser beam for recording and reproducing information is generally made at a predetermined position in the disc surface under the rotating condition. In order to accurately track the predetermined position (generally called a tracking position) for the irradiation by guiding the laser beam, the surface of the substrate is generally provided with a tracking guide (pregroove) of depressed shape.

By the way, a dye-containing recording layer is prepared by coating a substrate, having pregrooves formed therein, with a solution containing a dye and drying the substrate. In this case, the thickness of the dye layer on the bottom portion of each pregroove is greater than the thickness of the dye layer on a land portion between pregrooves.

Further, an information recoding medium, having a ROM area where pits are previously formed on a substrate and a recordable area where pits for reproducing data are to be formed by irradiation of the laser beam, have been proposed by this applicant in Japanese Patent No. 2957651, Japanese. Patent No. 3087902, Japanese Patent No. 2966077, Japanese Patent No. 3152351, and Japanese Unexamined Patent Publication H4-162227. In this information recording medium, prepits are formed in the ROM area of the substrate and pregrooves are formed in the recordable area (R area). A dye-containing recording layer is provided so that pits for reproduction of information are formed by irradiating the areas, where the prepits and the pregrooves are formed, with the laser beam, thereby recording information. Further, a metallic reflective layer is provided so that refractive-index modulated portions (recording pits) are formed by irradiating the dye-containing recording layer in the R area with the laser beam, thereby carrying out the recording in the R area. The strength of the laser beam for reproducing the information in the ROM area is small not to alter the optical characteristics of the dye-containing recording layer of the prepit portion.

Hereinafter, the information recording medium having a ROM area and an R area with a dye-containing recording layer provided on prepit portion and pregroove portion will be called an optical information recording medium of a hybrid type (hereinafter, sometimes referred to as a hybrid-type optical information recording medium) in this specification. As apparently disclosed in Japanese Patent No. 2957651, Japanese Patent No. 3087902, Japanese Patent No. 2966077, Japanese Patent No. 3152351, and Japanese Unexamined Patent Publication H4-162227, the depth of prepits and the depth of pregrooves are not equal to each other so that the prepits formed in the substrate are deeper than the pregrooves.

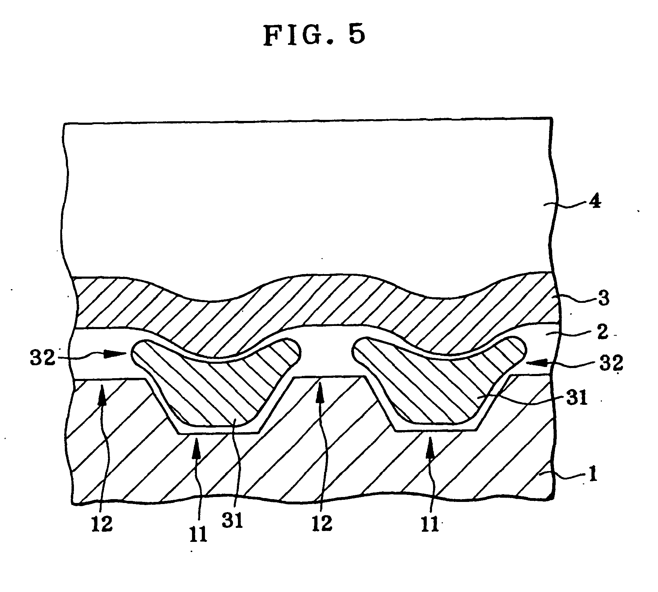

Fig. 5 schematically shows a section of a DRAW-type optical information recording medium which is prepared by forming a dye-containing recording layer 2 and a reflective layer 3, in this order, on a substrate 1 having conventional pregrooves. Pregrooves 11 are formed in the surface of the substrate 1. Defined between adjacent pregrooves 11 is a land 12. A dye-containing recording layer 2 is deposited on the surface including the pregrooves 11 and the lands 12, a reflective layer 3 is formed on the dye-containing recording layer 2, and a protective layer 4 is formed on the reflective layer 3. The thickness of the dye-containing recording layer 2 is approximately 100 nm at a location corresponding to the land 12 and approximately 200 nm at a location corresponding to the pregroove 11. The thickness of the reflective layer 3 is approximately 100 nm and the thickness of the protective layer 4 is approximately 7 µm. The structure of a pregroove portion of a hybrid-type optical information recording medium which comprises a substrate having conventional pregrooves, a dye-containing recording layer and a reflective layer are formed in this order on the substrate is identical with this structure shown in Fig. 5.

In the DRAW optical information recording medium, writing and reading of information are carried out by irradiating the medium with a laser beam at the substrate side. As for the writing (recording), refractive-index modulated portions (recording pits) 31 are formed in the dye-containing recording layer 2 by the irradiation of the laser beam, thereby writing the information. On the other hand, the reading (reproduction) is carried out by detecting phase changes due to the refractive-index modulated portions 31. Also in the hybrid-type optical information recording medium as mentioned, writing and reading of information in the R area are carried out by irradiating the medium with a laser beam at the substrate 1 side (similarly, reading of information in the ROM area is also carried out by irradiating the medium with a laser beam at the substrate 1 side). As for the writing (recording), refractive-index modulated portions (recording pits) 31 are formed in the dye-containing recording layer 2 by the irradiation of the laser beam, thereby writing the information. On the other hand, the reading (reproduction) is carried out by detecting phase changes due to the refractive-index modulated portions 31.

By the way, conventionally, the substrate 1 having the pregrooves 11 and the lands 12 is prepared as follows. First, a glass substrate is coated with a photoresist. The photoresist is exposed to light of a shape corresponding to the pregrooves 11 and the exposed photoresist is then developed so as to form grooves corresponding to the pregrooves 11. Then, nickel plating and electroforming are made onto the photoresist pattern and then separated so as to form a master. This master is used to create a copy as a mother by nickel electroforming. The mother is used to create a stamper by nickel electroforming. The thus formed stamper is used as a mold for molding a resin by, for example, injection molding so as to obtain the substrate 1. (This preparing method is called "photoresist method".) The thus formed substrate 1 has a section as shown in Fig. 5.

The substrate having the prepits and the pregrooves and the lands for the hybrid-type optical information recording medium is prepared similarly. First, a glass substrate is coated with a photoresist. The photoresist is exposed to high-intensity light of a shape corresponding to the prepits and to low-intensity light of a shape corresponding to the pregrooves. The exposed photoresist is then developed so as to form deep concavities corresponding to the prepits and form shallow grooves corresponding to the pregrooves. Then, nickel plating and electroforming are made onto the photoresist pattern and then separated so as to form a master. This master is used to create a mother by nickel electroforming. The mother is used to create a stamper by nickel electroforming. The thus formed stamper is used as a mold for molding a resin by, for example, injection molding so as to obtain the substrate. (This preparing method is called "photoresist method".) The thus formed pregroove portion has a section as shown in Fig. 5.

As information is written in the dye-containing recording layer 2 of the DRAW-type optical information recording medium having the aforementioned substrate 1 or in the dye-containing recording layer 2 with in the R area of the hybrid-type optical information recording medium, refractive-index modulated portions 31 may not stay within the pregroove 11 area and partially spread onto the lands 12 area, such portions being indicated by numeral 23 as shown in Fig. 5. As a result of this spread of refractive-index modulated portions (recording pits) 31, there has been caused such problems of increasing the crosstalk rate and increasing jitter value, thus leading to error of recording.

JP(A) 2000123409 discloses an optical information recording medium, which comprises: a disc-shaped substrate in which grooves and lands are formed; a plurality of sublayers constituting a film having a constant thickness and covering said grooves and lands, wherein rims having a projection-like section are formed along both side edges of each groove of the substrate. The grooves of this prior art optical information recording medium are empty. Therefore, the above problem explained with regard to figure 5 does not arise. A specific feature of this prior art optical information recording medium is that the tips of said rims all lie within one plane such that the bottom surface of a slider of an optical head rests on the tips of the rims such that said slider is floated without stiction force acting between the slider and the medium.

Jpn. J. of Appl. Phys. Vol (38) p 6114-6117, 1999-10-10 discloses an optical information recording system in which conventional magneto-optical media were used to record information in form of small spots. Since such spots could be erased, it has been suggested to chose NTI as recording medium, trying to detect recorded spots by fluorescent detection. Such detection method is said to be advantagous over the transmittance-detection method in that the signal-to-noise ratio is improved.

EP-0 994 466 A2 discloses a magneto-optical recording system having a recording medium in which pre-pits can be prepared on which an address signal or the like is recorded.

### SUMMERY OF THE INVENTION

The present invention was made in the light of the above described problems and an object of the present invention is to reduce the crosstalk rate and improve the jitter value by improving the shape of pregrooves in an optical information recording medium of a recordable type (hereinafter, sometimes referred to as a recordable-type optical information recording medium) comprising a substrate having the pregrooves and a dye-containing recording layer formed on the substrate.

This is achieved by the features of claims 1 and 5. Preferred embodiments are defined by the dependent claims.

The present invention reduces the crosstalk rate and improves the jitter value by improving the shape of pregrooves in a recordable area of a hybrid-type optical information recording medium having a read-only area where information is previously recorded and the recordable area where information can be written and reproduced by the laser beam.

According to the present invention, since the rims having a projection-like section are formed along the both side edges of each pregroove in the substrate, the formation of pits to be formed in the dye-containing recording layer is limited within the pregrooves because of the shielding function of the rims, thereby preventing the pits from spreading onto the lands. As a result, the crosstalk rate is reduced and the jitter value is improved.

According to the present invention, since the rims having a projection-like section are formed along the both side edges of each pregroove in the substrate, the formation of pits to be formed in the dye-containing recording layer is limited within the pregrooves because of the shielding function of the rims, thereby preventing the pits from spreading onto the lands. As a result, the crosstalk rate at the recordable area is reduced and the jitter value is improved. Accordingly, the reproduction compatibility relative to playback equipments (players) is improved. On the other hand, an optical information recording medium in which rims having projection-like section are formed along the both sides of prepits has improved amplitude response modulation in the read-only area.

Still other objects and advantages of the invention will in part be obvious and will in part be apparent from the specification.

The invention accordingly comprises the features of construction, combinations of elements, and arrangement of parts which will be exemplified in the construction hereinafter set forth, and the scope of the invention will be indicated in the claims.

### BRIEF DESCRIPTION OF THE DRAWINGS

Fig. 1 is an illustration schematically showing a section of an example of a recordable-type optical information recording medium according to the present invention;
Figs. 2 (a) , 2 (b) are illustrations for explaining the definition of the depth and width of pregroove and the height and width of rim;
Fig. 3 is a diagram for explaining the method of preparing a stamper by direct laser beam ablation method using a dye polymer;
Fig. 4 is an illustration schematically showing a section of an example of the hybrid type optical information recording medium according to the present invention; and
Fig. 5 is an illustration schematically showing a section of a conventional recordable-type optical information recording medium.

### DESCRIPTION OF THE PREFERRED EMBODIMENTS

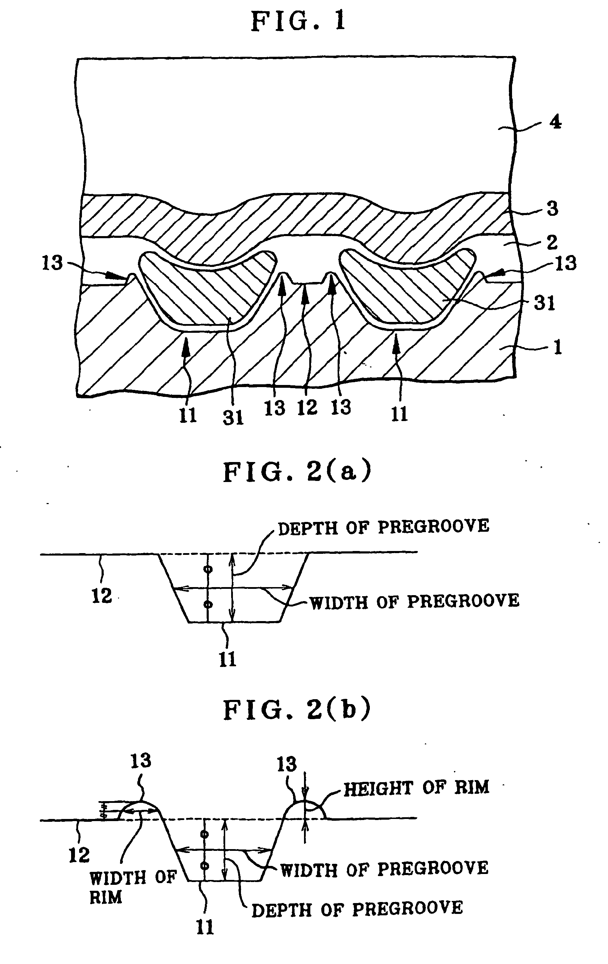

The basic principle of a recordable-type optical information recording medium of the present invention is as follows. As shown in Fig. 1, rims (raised ridges) 13 are formed integrally with both side edges of each of pregrooves 11 formed in a surface of a transparent substrate 1 and each land 12 is thus defined between the rims 13 so as to prevent the refractive-index modulated portions (recording pits) 31 from spreading onto the lands 12, thereby reducing the crosstalk rate and improving the jitter value.

That is, Fig. 1 is an illustration schematically showing a section of an optical information recording medium comprising the substrate 1 having pregrooves 11, a dye-containing recording layer 2 and a reflective layer 3 which are formed on the substrate 1 in this order. The pregrooves 11 are formed in the surface of the substrate 1, the rims (raised ridges) 13 are formed integrally with the both side edges of each of the pregrooves 11, and each flat land 12 is formed between the adjacent pregrooves 11 having rims. The dye-containing recording layer 2 is deposited on the surface including the pregrooves 11 provided along their edges with rims 13 and the lands 12, the reflective layer 3 made of silver or the like is formed on the dye-containing recording layer 2, and a protective layer 4 is formed on the reflective layer 3.

When refractive-index modulated portions (recording pits) 31 are formed in the dye-containing recording layer 2 in the pregroove 11 by irradiating the medium with a laser beam at the side of the substrate 1, the formation of the refractive-index modulated portions 31 is limited within the pregrooves 11 because of the shielding function of the rims 13 formed along the both side edges of the pregroove 11, thereby preventing the refractive-index modulated portions from spreading onto the lands 12 like the conventional (Fig. 5) one. As a result, the crosstalk rate is reduced and the jitter value is improved.

The height of the rim 13 is defined as a height from the land 12 and the width of the rim 13 is defined as a width at a half level of the height of the rim 13 as shown in Fig. 2(b). The depth of the pregroove 11 is defined as a depth from the land 12 and the width of the pregroove 11 is defined as a width at a half level of the depth of the pregroove 11 as shown in Figs. 2(a) and 2(b). In this case, the height of the rim 13 is preferably from 3 to 100 nm, more preferably from 5 to 80 nm, and further preferably from 10 to 70 nm. The width of the rim 13 is preferably from 10 to 200 nm, more preferably from 20 to 150 nm, and further preferably from 30 to 120 nm.

Accordingly, the depth of the pregroove 11 is preferably from 80 to 350 nm, more preferably from 100 to 300 nm, and further preferably from 170 to 240 nm. The width of the pregroove is preferably from 200 to 800 nm, more preferably from 350 to 700 nm, and further preferably from 550 to 650 nm.

By the way, for preparing a stamper to be used for molding the transparent substrate 1 having the pregrooves 11 provided along their both sides with rims 13, it is preferable to use the direct laser beam ablation method. The process provided by Optical Disc Corporation (ODC: US company) includes using dye polymer to be deposited to form a layer and irradiating the layer with a laser beam to form grooves. Because the thus formed grooves have rims (raised ridges) along the both side edges of the grooves, the ODC's process is suitable as a method for preparing a stamper for molding the transparent substrate 1 used in the present invention. However the method of the present invention is not limited thereto.

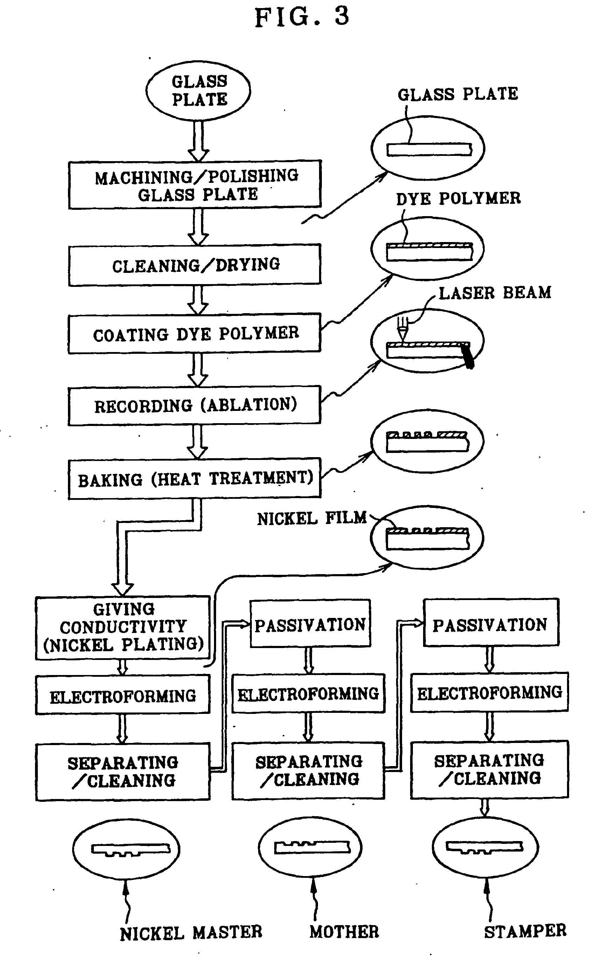

Hereinafter, the method of preparing the stamper using the direct laser beam ablation method using dye polymer will be described with reference to Fig. 3. As shown in Fig. 3, first a glass plate is prepared. The surface of the glass plate is machined and polished. After that, the glass plate is cleaned and dried and is then coated with the dye polymer available from ODC by spin coating or the like to have a thickness of approximately 500 µm. By using a laser ablation machine of ODC, grooves as patterns of the pregrooves 11 are recorded (ablated). During this, rims (raised ridges) as patterns of the rims 13 are automatically formed along the both side edges of the grooves. Then, the dye polymer with the grooves and the rims are baked. After that, nickel is plated on the dye polymer with patterns and nickel electroforming is further conducted thereon so the nickel is separated from the dye polymer and then cleaned so as to create a nickel master. Passivation is made on the surface of the nickel master. The nickel master is used to create a nickel mother through similarly the nickel electroforming step and the separation/cleaning step. Further, the nickel mother is used to create a nickel stamper through similarly the nickel electroforming step and the separation/cleaning step. The thus formed stamper is used as a mold for molding a resin such as polycarbonate by, for example, injection molding so as to duplicate the concavoconvex patterns in the molded resin, thereby obtaining the transparent substrate 1 to be used in the optical information recording medium of the present invention as shown in Fig. 1. Hereinafter, this preparing method is called "direct laser beam ablation method".

Now, examples of the optical information recording media of the present invention will be described.

### EXAMPLE 1

A transparent substrate 1 was formed in the same manner as stated above with reference to Fig. 3. That is, the surface of a glass plate was machined and polished, cleaned and dried, and then coated with the dye polymer available from ODC by spin coating to have a thickness of approximately 500 µm. By using a laser ablation machine of ODC, grooves as patterns of the pregrooves 11 were recorded on the dye polymer and then baked. A nickel master, a nickel mother, and a nickel stamper were created in this order as shown in Fig. 3. The thus formed stamper was used as a mold for injection molding of polycarbonate. In this manner, the transparent substrate 1 was obtained. The pregrooves 11 of the obtained transparent substrate 1 were 195 nm in depth and 600 nm in width. The rims 13 were 30 nm in height and 80 nm in width.

A dye solution prepared by dissolving 2.5 g of a dye represented by the following formula (I) in 100 cc of tetrafluoropropanol was applied to the surface, provided with the pregrooves 11, the lands 12, and the rims 13, of the transparent substrate 1 by spin coating to have a thickness of 200 nm on the pregrooves 11 and a thickness of 100 nm on the lands 12, thus obtaining a dye-containing recording layer 2.

On the dye-containing recording layer 12, a reflective layer 3 made of Ag having a thickness of 90 nm was formed by DC magnetron sputtering.

Further, as a protective layer 4 on the reflective layer, SD318 (available from DAINIPPON INK AND CHEMICALS, INC.) was applied by spin coating and cured by irradiation of ultraviolet rays to have a thickness of 7 µm. In this manner, the optical information recording medium of this example was obtained.

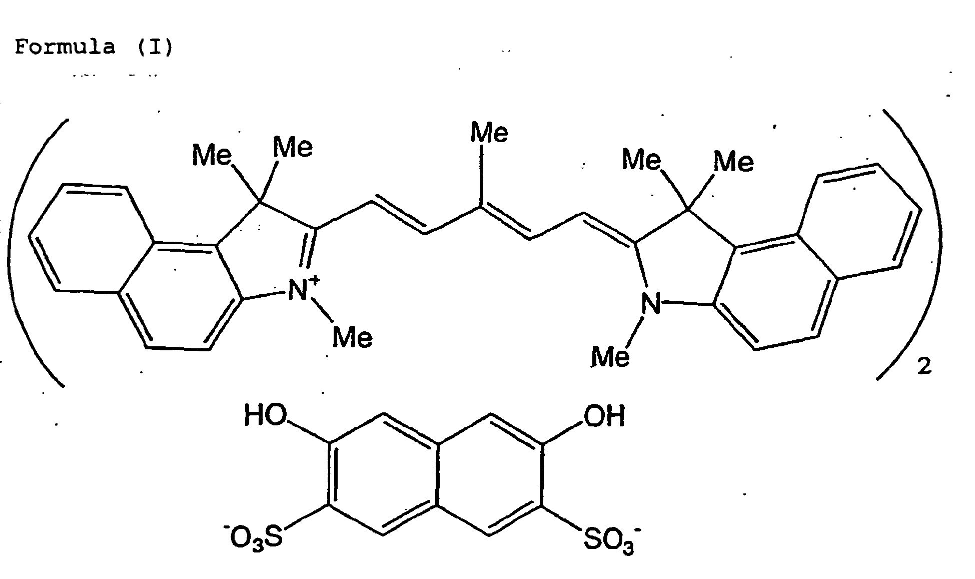

### EXAMPLE 2

An optical information recording medium of this example was obtained in the same manner as Example 1 except that a dye solution prepared by dissolving 2g of Super Green OS available from Ciba Specialty Chemicals, instead of the dye of the formula (I), in 100 cc of a mixture solvent of 95 parts by weight of dibutyl ether and 5 parts by weight of dimethyl heptanone was applied to the surface, provided with pregrooves 11, lands 12, and rims 13, of the transparent substrate 1 by spin coating to have a thickness of 200 nm on the pregrooves 11 and a thickness of 100 nm on the lands 12, thus obtaining a dye-containing recording layer 2. In this manner, the optical information recording medium of this example was obtained.

### COMPARATIVE EXAMPLE 1

An optical information recording medium of this example was obtained in the same manner as Example 1 except that a transparent substrate 1 was prepared by the conventional photoresist method. The obtained transparent substrate 1 has pregrooves 11 of which depth was 195 nm and width was 600 nm and no rims.

### COMPARATIVE EXAMPLE 2

An optical information recording medium of this example was obtained in the same manner as Example 2 except that a transparent substrate 1 was prepared by the conventional photoresist method. The obtained transparent substrate 1 has pregrooves 11 of which depth was 195 nm and width was 600 nm and no rims.

The jitter values and the crosstalk rates in the optical information recording media of Examples 1 and 2, Comparative Examples 1 and 2 are shown in Table 1 below for purpose of comparison.

**TABLE 1**

| | Example 1 | Example 2 | Comparative Example 1 | Comparative Example 2 |
|---|---|---|---|---|
| Jitter 3 Tipt | 28 ns | 27 ns | 32 ns | 31 ns |
| Crosstalk | 38% | 39% | 45% | 47% |

In the above description, the optical information recording medium comprises the transparent substrate 1, the dye-containing recording layer 2 on the substrate 1, the reflective layer 3 on the layer 2, and the protective layer 4 on the reflective layer 3, and writing and reading of information are carried out at the side of the transparent substrate 1. However, there are such media that writing and reading of information are carried out at the side (the side of the protective layer 4) opposite to the side of the transparent substrate 1. Typical examples of such media are short-wavelength DVD-R and DVR. In this case, the optical information recording medium comprises the transparent substrate 1, the reflective layer 3 on the substrate 1, the dye-containing recording layer 2 on the reflective layer 3, and the protective layer 4 on the dye-containing recording layer 2. Also with this layer structure, by using as the transparent substrate 1 a substrate in which rims 13 are formed along the both side edges of pregrooves 11, the same effects can be obtained. That is, when refractive-index modulated portions (recording pits) 31 are formed in the dye-containing recording layer 2 in the pregrooves 11 by irradiating the medium with a writing laser beam at the side of the protective layer 4, the formation of the refractive-index modulated portions 31 is limited within the pregrooves 11 because of the shielding function of the rims 13, thereby preventing the refractive-index modulated portions from spreading onto the lands 12. Accordingly, the crosstalk rate is reduced and the jitter value is improved.

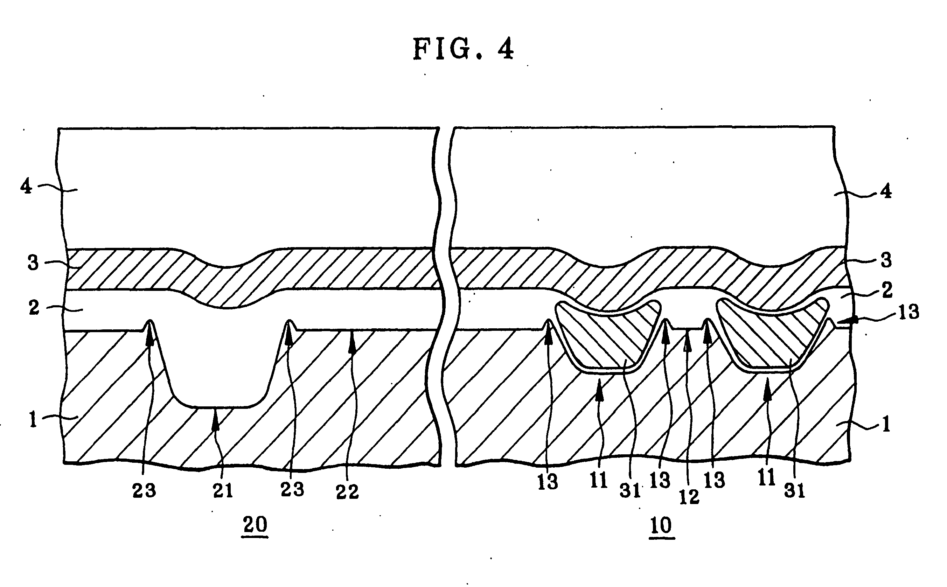

Hereinafter, a hybrid-type optical information recording medium will be described. The basic principle of the hybrid-type optical information recording medium is as follows. As shown in Fig. 4, rims (raised ridges) 13 are formed integrally with both side edges of each of pregrooves 11 formed in a surface of a transparent substrate 1 within an R area 10 of the optical information recording medium and each land 12 is thus defined between the adjacent rims 13 so as to prevent the refractive-index modulated portions (recording pits) 31 from spreading onto the lands 12, thereby reducing the crosstalk rate and improving the jitter value.

That is, Fig. 4 is an illustration schematically showing a section of a hybrid-type optical information recording medium comprising the substrate 1 having pregrooves 11 in the R area 10 and having prepits 21 in a ROM area 20, a dye-containing recording layer 2 and a refracting layer 3 which are formed on the substrate 1 in this order. In the R area 10, the pregrooves 11 are formed in the surface of the substrate 1, the rims (raised ridges) 13 are formed integrally with the both side edges of each of the pregrooves 11, and each flat land 12 is formed between the adjacent pregrooves 11 having rims 13 . The dye-containing recording layer 2 is deposited on the surface including the pregrooves 11 provided along their edges with rims 13 and the lands 12, the reflective layer 3 made of silver or the like is formed on the dye-containing recording layer 2, and a protective layer 4 is formed on the reflective layer 3.

On the other hand, in the ROM area 20, the prepits 21 having a depth greater than that of the pregrooves 11 are formed in the surface of the transparent substrate 1, a dye-containing recording layer 2 and a refracting layer 3 are formed on the substrate 1 in this order. When the prepits 21 are formed according to the same method as the pregrooves 11, rims (raised ridges) 23 are formed integrally with the both side edges of each of the prepits 21, and each flat land 22 is formed between the adjacent rims 23.

When refractive-index modulated portions (recording pits) 31 are formed in the dye-containing recording layer 2 in the pregroove 11 by irradiating the R area 10 of the medium with a laser beam at the side of the substrate 1, the formation of the refractive-index modulated portions 31 is limited within the pregrooves 11 because of the shielding function of the rims 13, thereby preventing the refractive-index modulated portions from spreading onto the lands 12 like the conventional (Fig. 5) one. As a result, the crosstalk rate is reduced and the jitter value is improved.

The height of the rim 13 is defined as a height from the land 12 and the width of the rim 13 is defined as a width at a half level of the height of the rim 13 as shown in Fig. 2(b). The depth of the pregroove 11 is defined as a depth from the land 12 and the width of the pregroove 11 is defined as a width at a half level of the depth of the pregroove 11 as shown in Figs. 2(a) and 2(b). In this case, the height of the rim 13 is preferably from 3 to 100 nm, more preferably from 5 to 80 nm, and further preferably from 10 to 70 nm. The width of the rim 13 is preferably from 10 to 200 nm, more preferably from 20 to 150 nm, and further preferably from 30 to 120 nm.

Accordingly, the depth of the pregroove 11 is preferably from 80 to 350 nm, more preferably from 100 to 300 nm, and further preferably from 170 to 240 nm. The width of the pregroove is preferably from 200 to 800 nm, more preferably from 400 to 700 nm, and further preferably from 500 to 650 nm.

The depth and width of the prepit 21 are defined in the same manner as shown in Figs. 2(a) and 2(b). To ensure enough amplitude response modulation for reading information, the depth of the prepit 21 is preferably from 200 to 500 nm, more preferably from 250 to 450 nm, and further preferably from 275 to 375 nm. The width of the prepit 21 is preferably from 300 to 850 nm, more preferably from 500 to 800 nm, and further preferably from 600 to 750 nm.

As comparison of depth between the pregroove 11 and the prepit 21 is made, the prepit 21 is deeper than the pregroove 11 by 30 nm or more, preferably 50 nm or more, more preferably 70 nm or more. As comparison of width between the pregroove 11 and the prepit 21, the prepit 21 is wider than the pregroove 11 by 20 nm or more, preferably 40 nm or more, more preferably 60 nm or more.

By the way, for preparing a stamper to be used for molding the transparent substrate 1 having the pregrooves 11 provided along their both sides with rims 13 in the R area 10, it is preferable to use the direct laser beam ablation method. The process provided by Optical Disc Corporation (ODC: US company) includes using dye polymer to be deposited to form a layer and irradiating the layer with a laser beam to form grooves. Because the thus formed grooves have rims (raised ridges) along the both side edges of the grooves, the ODC's process is suitable as a method for preparing a stamper for molding the transparent substrate 1 used in the present invention. However the method of the present invention is not limited thereto.

Hereinafter, the method of preparing the stamper using the direct laser beam ablation method using dye polymer will be described with reference to Fig. 3. As shown in Fig. 3, first a glass plate is prepared. The surface of the glass plate is machined and polished. After that, the glass plate is cleaned and dried and is then coated with the dye polymer available from ODC by spin coating or the like to have a thickness of approximately 500 µm. By using a laser ablation machine of ODC, grooves as patterns of the pregrooves 11 and pits (concaves) as patterns of the prepits 21 are recorded (ablated). During this, the laser power is controlled to be strong when forming the pits and to be weak when forming the grooves in order to make the pits deeper than the grooves. During the irradiation of the laser beam, rims (raised ridges) as patterns of the rims 13 and patterns of the rims 23 are automatically formed along the both side edges of the grooves and the pits, respectively. Then, the dye polymer with the grooves, the pits, and the rims are baked. After that, nickel is plated on the dye polymer with these patterns and nickel electroforming is further conducted thereon so the nickel is separated from the dye polymer and then cleaned so as to create a nickel master. Passivation is made on the surface of the nickel master. The nickel master is used to create a nickel mother through similarly the nickel electroforming step and the separation/cleaning step. Further, the nickel mother is used to create a nickel stamper through similarly the nickel electroforming step and the separation/cleaning step. The thus formed stamper is used as a mold for molding a resin such as polycarbonate by, for example, injection molding so as to duplicate the concavoconvex patterns in the molded resin, thereby obtaining the transparent substrate 1 to be used in the hybrid-type optical information recording medium of the present invention as shown in Fig. 4. Hereinafter, this preparing method is called "direct laser beam ablation method".

Now, examples of the hybrid-type optical information recording media of the present invention will be described.

### EXAMPLE 3

A transparent substrate 1 was formed in the same manner as stated above with reference to Fig. 3. That is, the surface of a glass plate was machined and polished, cleaned and dried, and then coated with the dye polymer available from ODC by spin coating to have a thickness of approximately 500 µm. By using a laser ablation machine of ODC, grooves and pits as patterns of the pregrooves 11 and patterns of the prepits 21 were recorded on the dye polymer and then baked. A nickel master, a nickel mother, and a nickel stamper were created in this order as shown in Fig. 3. The thus formed stamper was used as a mold for injection molding of polycarbonate. In this manner, the transparent substrate 1 was obtained. The pregrooves 11 of the obtained transparent substrate 1 were 195 nm in depth and 600 nm in width. The rims 13 were 30 nm in height and 80 nm in width.

In this example, the shape of the prepits 21 is not a concern.

A dye solution prepared by dissolving 2.5 g of a dye represented by the above formula (I) in 100 cc of tetrafluoropropanol was applied to the surface, provided with the pregrooves 11, the lands 12, and the rims 13 in the R area and with the prepits 21, the lands 22, and the rims 23 in the ROM area 20, of the transparent substrate 1 by spin coating to have a thickness of 200 nm on the pregrooves 11 and a thickness of 100 nm on the lands 12, thus obtaining a dye-containing recording layer 2.

On the dye-containing recording layer 2, a reflective layer 3 made of Ag having a thickness of 90 nm was formed by DC magnetron sputtering.

Further, as a protective layer 4 on the reflective layer, SD318 (available from DAINIPPON INK AND CHEMICALS, INC.) was applied by spin coating and cured by irradiation of ultraviolet rays to have a thickness of 7 µm. In this manner, the hybrid-type optical information recording medium of this example was obtained.

### EXAMPLE 4

A hybrid-type optical information recording medium of this example was obtained in the same manner as Example 3 except that a dye solution prepared by dissolving 2g of Super Green OS available from Ciba Specialty Chemicals, instead of the dye of the formula (I), in 100 cc of a mixture solvent of 95 parts by weight of dibutyl ether and 5 parts by weight of dimethyl heptanone was applied to the surface, provided with the pregrooves 11, the lands 12, and the rims 13 in the R area 10 and with the prepits 21, the lands 22, and the rims 23 in the ROM area 20, of the transparent substrate 1 by spin coating to have a thickness of 200 nm on the pregrooves 11 and a thickness of 100 nm on the lands 12, thus obtaining a dye-containing recording layer 2. In this manner, the hybrid-type optical information recording medium of this example was obtained.

### EXAMPLE 5

A hybrid-type optical information recording medium of this example was obtained in the same manner as Example 4 except for being concerned about the shape of the prepits 21 to have a depth of 350 nm and a width of 650 nm and being concerned about the shape of the rims 23 to have height 60 nm and a width of 100 nm, without being concerned about the shape of pregrooves 11.

The others were the same as those of Example 4. In this manner, the hybrid-type optical information recording medium of this example was obtained.

### EXAMPLE 6

A hybrid-type optical information recording medium of this example was obtained in the same manner as Example 4 except for being concerned about the shape of the prepits 21 to have a depth of 310 nm and a width of 600 nm and being concerned about the shape of the rims 23 to have height 30 nm and a width of 90 nm, without being concerned about the shape of pregrooves 11.

The others were the same as those of Example 4. In this manner, the hybrid-type optical information recording medium of this example was obtained.

### COMPARATIVE EXAMPLE 3

An optical information recording medium of this example was obtained in the same manner as Example 3 except that a transparent substrate 1 was prepared by the conventional photoresist method. The obtained transparent substrate 1 has pregrooves 11 of which depth was 195 nm and width was 600 nm and no rims.

### COMPARATIVE EXAMPLE 4

An optical information recording medium of this example was obtained in the same manner as Example 4 except that a transparent substrate 1 was prepared by the conventional photoresist method. The obtained transparent substrate 1 has pregrooves 11 of which depth was 195 nm and width was 600 nm and no rims.

### COMPARATIVE EXAMPLE 5

A hybrid-type optical information recording medium of this example was obtained in the same manner as Comparative Example 4 except for being concerned about the shape of the prepits 21 to have a depth of 195 nm and a width of 600 nm, without being concerned about the shape of pregrooves 11. No rims 23 were formed.

### COMPARATIVE EXAMPLE 6

A hybrid-type optical information recording medium of this example was obtained in the same manner as Comparative Example 4 except for being concerned about the shape of the prepits 21 to have a depth of 310 nm and a width of 600 nm, without being concerned about the shape of pregrooves 11. No rims 23 were formed.

The jitter values and the crosstalk rates in the R areas of the optical information recording media of Examples 3 and 4, Comparative Examples 3 and 4 are shown in Table 2 below for the purpose of comparison.

**TABLE 2**

| | Example 3 | Example 4 | Comparative Example 3 | Comparative Example 4 |
|---|---|---|---|---|
| Jitter 3 Tipt | 28 ns | 27 ns | 32 ns | 31 ns |
| Crosstalk | 38% | 39% | 45% | 47% |

In addition, the amplitude response modulations in the ROM areas of the optical information recording media of Examples 5 and 6, Comparative Examples 5 and 6 are shown in Table 3 below for the purpose of comparison.

**TABLE 3**

| | Example 5 | Example 6 | Comparative Example 5 | Comparative Example 6 |
|---|---|---|---|---|
| 11T Modulation | 68% | 64% | 36% | 45% |

In the above description, the optical information recording medium comprises the transparent substrate 1, the dye-containing recording layer 2 on the substrate 1, the reflective layer 3 on the dye-containing recording layer 2, and the protective layer 4 on the reflective layer 3, and writing and reading of information are carried out at the side of the transparent substrate 1. However, there are such media that writing and reading of information are carried out at the side (the side of the protective layer 4) opposite to the side of the transparent substrate 1. Typical examples of such media are short-wavelength DVD-R and DVR. In this case, the optical information recording medium comprises the transparent substrate 1, the reflective layer 3 on the substrate 1, the dye-containing recording layer 2 on the reflective layer 3, and the protective layer 4 on the dye-containing recording layer 2. Also with this layer structure, by using as the transparent substrate 1 a substrate in which rims 13 are formed along the both side edges of pregrooves 11, the same effects can be obtained. That is, when refractive-index modulated portions (recording pits) 31 are formed in the dye-containing recording layer 2 in the pregrooves 11 by irradiating the medium with a writing laser beam at the side of the protective layer 4, the formation of the refractive-index modulated portions 31 is limited within the pregrooves 11 because of the shielding function of the rims 13, thereby preventing the refractive-index modulated portions 31 from spreading onto the lands 12. Accordingly, the crosstalk rate is reduced and the jitter value is improved.

Though the optical information recording medium of the present invention has been described on the bases of the principle thereof and with reference to above particular embodiments, the present invention is not confined to these embodiment and various changes may be made.

As apparent from the above description, according to the optical information recording medium of the present invention, rims having projection-like section are formed along the both side edges of pregrooves formed in a substrate. Because of the shielding function of the rims, the formation of pits to be recorded in a dye-containing recording layer is limited within the pregrooves, thereby preventing the pits from spreading onto the lands. As a result, the crosstalk rate in the recordable area is reduced and the jitter value is improved. Accordingly, the reproduction compatibility relative to playback equipments (players) is improved. On the other hand, the optical information recording medium obtained by using a substrate provided with rims having projection-like section formed along the both sides of prepits has improved amplitude response modulation in the read-only area.

## Claims

1. An optical information recording medium comprising:
a disc-shaped substrate (1) in which pregrooves (11) and lands (12) are formed; a recording layer (2) in which refractive- index modulated portions within the pregrooves (11) (pits) (31) can be formed by irradiation of a laser beam so as to record information; and a reflective layer (3) formed on the recording layer (2) wherein rims (13) having a projection-like section are formed along both side edges of each pregroove (11) of said substrate (1), **characterized in that** said recording layer is a dye-containing recording layer and that said reflective layer (3) is laid on a surface of said dye-containing recording layer (2) which is opposite to a surface on which the said substrate (1) is laid.

2. An optical information recording medium as claimed in claim 1, wherein said reflective layer (3) is basically made of metal.

3. An optical information recording medium as claimed in claim 1 or 2, wherein said substrate (1) is formed using a stamper as a mother mold which has a copy of concavoconvex patterns formed directly by irradiating a laser beam onto a layer made of dye-containing polymer, without using a photoresist.

4. An optical information recording medium as claimed in claims 1, 2 or 3, wherein each of said rim (13) has a section of which height is in a range from 3 to 100 nm and width is in a range from 10 to 200 nm.

5. An optical information recording medium comprising:
a disc-shaped substrate (1) in which prepits (21) and pregrooves (11) are formed; a recording layer (2) in which refractive-index modulated portions within the pregrooves (11) (pits) (31) can be formed by irradiation of a laser beam so as to record information; and a reflective layer (3) formed on the recording layer (2) , wherein rims (13) having a projection-like section are formed along both side edges of each pregroove of said substrate, **characterized in that** said recording layer is a dye-containing recording layer and that said reflective layer (3) is laid on a surface of said dye-containing recording layer (2) which is opposite to a surface on which the said substrate (1) is laid.

6. An optical information recording medium as claimed in claim 5, wherein said reflective layer (3) is basically made of metal.

7. An optical information recording medium as claimed in any one of claims 5 through 6, wherein said substrate (1) is formed using a stamper as a mother mold which has a copy of concavoconvex patterns formed directly by irradiating a laser beam onto a layer made of dye-containing polymer, without using a photoresist.

8. An optical information recording medium as claimed in any one of claims 5 through 7 wherein each of said rim (13) has a section of which height is in a range from 3 to 100 nm and width is in a range from 10 to 200 nm.

## Patentansprüche

1. Optisches Informationsaufzeichnungsmedium, umfassend:
ein scheibenförmiges Substrat (1), in welchem Vornuten (11) und Stege (12) gebildet sind; eine Aufzeichnungsschicht (2), in der brechungsindex-modulierte Abschnitte innerhalb der Vornuten (11) (Pits) (31) durch Bestrahlung mit einem Laserstrahl gebildet werden können, um Information aufzuzeichnen; und eine reflektierende Schicht (3), die auf der Aufzeichnungsschicht (2) gebildet ist, wobei Randzonen (13) mit einem vorsprungähnlichen Querschnitt entlang beiden Seitenrändern jeder Vornut (11) des Substrats (1) ausgebildet sind, **dadurch gekennzeichnet, daß** die Aufzeichnungsschicht eine farbstoffhaltige Aufzeichnungsschicht ist, und daß die reflektierende Schicht (3) auf einer Oberfläche der farbstoffhaltigen Aufzeichnungsschicht (2) aufliegt, die einer Fläche, auf der das Substrat (1) liegt, abgewandt ist.

2. Medium nach Anspruch 1, bei dem die reflektierende Schicht (3) im wesentlichen aus Metall besteht.

3. Medium nach Anspruch 1 oder 2, bei dem das Substrat (1) unter Verwendung eines Stempels als Matrizenformteil gebildet ist, die eine Kopie von konkav-konvexen Mustern aufweist, direkt gebildet durch Aufstrahlen eines Laserstrahls auf eine aus farbstoffhaltigem Polymer hergestellte Schicht ohne Einsatz eines Photoresists.

4. Medium nach Anspruch 1, 2 oder 3, bei dem jede Randzone einen Querschnitt aufweist, deren Höhe im Bereich von 3 bis 100 nm liegt, und deren Breite im Bereich von 10 bis 200 nm liegt.

5. Optisches Informationsaufzeichnungsmedium, umfassend:
ein scheibenförmiges Substrat (1), in welchem Vorpits (21) und Vornuten (11) ausgebildet sind; eine Aufzeichnungsschicht (2), in der brechungsindex-modulierte Abschnitte innerhalb der Vornuten (11) (Pits) (31) gebildet werden können durch Aufstrahlen eines Laserstrahls, um Information aufzuzeichnen; und eine reflektierende Schicht (3), die auf der Aufzeichnungsschicht (2) ausgebildet ist, wobei Randzonen (13) mit einem vorsprungähnlichen Querschnitt entlang beider Seitenränder jeder Vornut des Substrats ausgebildet sind, **dadurch gekennzeichnet, daß** die Aufzeichnungsschicht eine färbemittelhaltige Aufzeichnungsschicht ist, und daß die reflektierende Schicht (3) auf einer Fläche der färbemittelhaltigen Aufzeichnungsschicht (2) liegt, die einer Fläche, an welcher das Substrat (1) gelegen ist, abgewandt ist.

6. Medium nach Anspruch 5, bei dem die reflektierende Schicht (3) im wesentlichen aus Metall besteht.

7. Medium nach einem der Ansprüche 5 bis 6, bei dem das Substrat (1) unter Verwendung eines Stempels als Matrizenformteil gebildet ist, die eine Kopie von konkav-konvexen Mustern aufweist, direkt gebildet durch Aufstrahlen eines Laserstrahls auf eine aus farbstoffhaltigem Polymer hergestellte Schicht ohne Einsatz eines Photoresists.

8. Medium nach einem der Ansprüche 5 bis 7, bei dem jede Randzone einen Querschnitt aufweist, deren Höhe im Bereich von 3 bis 100 nm liegt, und deren Breite im Bereich von 10 bis 200 nm liegt.

## Revendications

1. Support d'enregistrement d'informations optiques comprenant :
un substrat en forme de disque (1) dans lequel des pré-sillons (11) et des plages (12) sont formés, une couche d'enregistrement (2) dans laquelle des parties à indice de réfraction modulé à l'intérieur des pré-sillons (11) (microcuvettes) (31 ) peuvent être formées par rayonnement d'un faisceau laser de façon à enregistrer des informations, et une couche de réflexion (3) formée sur la couche d'enregistrement (2), dans lequel des rebords (13) présentant une section du type en saillie sont formés le long des deux bords latéraux de chaque pré-sillon (11) dudit substrat (1), **caractérisé en ce que** ladite couche d'enregistrement est une couche d'enregistrement contenant un colorant et **en ce que** ladite couche de réflexion (3) est déposée sur une surface de ladite couche d'enregistrement contenant un colorant (2) qui est opposée à une surface sur laquelle ledit substrat (1) est déposé.

2. Support d'enregistrement d'informations optiques selon la revendication 1, dans lequel ladite couche de réflexion (3) est fondamentalement faite de métal.

3. Support d'enregistrement d'informations optiques selon la revendication 1 ou 2, dans lequel ledit substrat (1) est formé en utilisant un poinçon en tant que moule maître qui possède une copie des motifs concavo-convexes formés directement par rayonnement d'un faisceau laser sur une couche faite d'un polymère contenant un colorant, sans utiliser de résine photosensible.

4. Support d'enregistrement d'informations optiques selon la revendication 1, 2 ou 3, dans lequel chacun desdits rebords (13) présente une section dont la hauteur est dans une plage de 3 à 100 nm et la largeur est dans une plage de 10 à 200 nm.

5. Support d'enregistrement d'informations optiques comprenant :
un substrat en forme de disque (1), dans lequel des pré-microcuvettes (21) et des pré-sillons (11) sont formés, une couche d'enregistrement (2) dans laquelle des parties à indice de réfraction modulé à l'intérieur des pré-sillons (11) (microcuvettes) (31) peuvent être formées par rayonnement d'un faisceau laser de façon à enregistrer des informations, et une couche de réflexion (3) formée sur la couche d'enregistrement (2), dans lequel des rebords (13) présentant une section de type saillie sont formés le long des deux bords latéraux de chaque pré-sillon dudit substrat, **caractérisé en ce que** ladite couche d'enregistrement est une couche d'enregistrement contenant un colorant et **en ce que** ladite couche de réflexion (3) est déposée sur une surface de ladite couche d'enregistrement contenant un colorant (2) qui est opposée à une surface sur laquelle ledit substrat (1) est déposé.

6. Support d'enregistrement d'informations optiques selon la revendication 5, dans lequel ladite couche de réflexion (3) est fondamentalement faite de métal.

7. Support d'enregistrement d'informations optiques selon l'une quelconque des revendications 5 à 6, dans lequel ledit substrat (1) est formé en utilisant un poinçon en tant que moule maître qui possède une copie des motifs concavo-convexes formés directement par rayonnement d'un faisceau laser sur une couche faite d'un polymère contenant un colorant, sans utiliser de résine photosensible.

8. Support d'enregistrement d'informations optiques selon l'une quelconque des revendications 5 à 7, dans lequel chacun desdits rebords (13) présente une section dont la hauteur est dans une plage de 3 à 100 nm et la largeur est dans une plage de 10 à 200 nm.
